# FASCICULE DE BREVET EUROPEEN

(11) **EP 2 591 392 B1**
(45) Date de publication et mention de la délivrance du brevet: **21.03.2018**
(21) Numéro de dépôt: 11730967.4
(22) Date de dépôt: 08.07.2011
(51) Int. Cl.: G02C 5/18, G02C 5/20

(54) **BRANCHE DE MONTURE DE LUNETTES A GALBE MODIFIABLE**
BÜGEL EINES BRILLENGESTELLS MIT VERÄNDERBARER KRÜMMUNG
SPECTACLES FRAME SIDE WITH CHANGEABLE CURVATURE

(30) Priorité: 09.07.2010 FR 1002906
(43) Date de publication de la demande: 15.05.2013
(73) Titulaire: Chêne, Richard, 92200 Neuilly (FR); Miklitarian, Alain, 75014 Paris (FR); Delamour, Dominique, 78490 Les Mesnuls (FR)
(72) Inventeur: Chêne, Richard, 92200 Neuilly (FR); Miklitarian, Alain, 75014 Paris (FR); Delamour, Dominique, 78490 Les Mesnuls (FR)
(74) Mandataire: Office Kirkpatrick
(86) Numéro de dépôt international: PCT/EP2011/061702
(87) Numéro de publication internationale: WO 2012/004406

(56) Documents cités:
- EP-A1- 0 698 801
- EP-A1- 2 096 485
- WO-A1-2010/076758
- WO-A2-2008/109849
- US-A- 6 036 310

## Description

Le domaine de l'invention est celui des montures de lunettes.

Une monture de lunettes comporte une face avant et deux branches montées articulées sur la monture par l'intermédiaire de charnières.

Une branche de monture comporte une âme sur laquelle elle est formée. Il peut s'agir d'un câble ou, plus rigide, d'une tige, ou d'une soie, pour utiliser le terme du métier.

Une branche de monture de lunettes est généralement galbée. Des branches de monture de lunettes à galbe modifiable sont divulguées dans les documents WO 2008/109849, EP 2096485 et EP 0698801. Le document WO2010/076758 présente une charnière de monture de lunettes intégré à une portion de la branche. Eh bien, les demandeurs ont eu l'idée de vouloir modifier à volonté et de façon réversible le galbe des branches de monture de lunettes pour mieux les adapter à la tête des utilisateurs et pour améliorer leur confort.

Ainsi, l'invention concerne une branche de monture de lunettes selon la revendication 1. La branche comporte une extrémité avant d'articulation, agencée pour être articulée à une face avant de monture par l'intermédiaire d'une charnière, et une extrémité arrière libre, une âme s'étendant à l'intérieur de la branche, caractérisée par le fait que l'une des deux extrémités avant et arrière de l'âme est ancrée dans l'une des deux extrémités avant et arrière de la branche et la branche comporte, fixés à elle, des moyens d'entraînement et de mise en forme pour entraîner l'autre des extrémités de l'âme, montée mobile, en déplacement dans l'autre des extrémités de la branche et déformer la branche et modifier ainsi son galbe.

Grâce aux moyens d'entraînement, solidaires de la branche, on peut donc relativement à la branche, raccourcir l'âme, avec pour effet de courber ou d'augmenter la courbure de la branche.

De préférence, l'extrémité mobile de l'âme est filetée pour coopérer avec un manchon taraudé, des moyens d'entraînement et de mise en forme de la branche comprenant aussi une molette d'entraînement en rotation du manchon.

Les moyens d'entraînement peuvent être disposés dans l'extrémité avant d'articulation ou dans l'extrémité arrière libre de la branche.

De préférence, l'âme s'étend dans un canal ménagé dans la branche et le long duquel sont ménagés des ponts espacés de mise en forme sous lesquels passe l'âme.

Avantageusement, la branche comporte au moins une zone rigidifiée locale empêchant la modification du galbe dans un plan pour la permettre orthogonalement à ce plan.

Dans ce cas, la variation du galbe de la branche est donc globalement possible en 3D.

L'invention sera mieux comprise à l'aide de la description suivante de plusieurs formes de réalisation de la branche de monture de lunettes de l'invention, en référence au dessin en annexe, sur lequel
- la figure 1 est une vue en perspective de l'extérieur d'une première forme de réalisation de la branche de l'invention ;
- la figure 2 est une vue en perspective de l'intérieur de la branche de la figure 1 ;
- la figure 3 est une vue en perspective de l'extérieur d'une deuxième forme de réalisation de la branche de l'invention ;
- la figure 4 est une vue en perspective de l'intérieur de la branche de la figure 3 ;
- la figure 5 est une vue en perspective de l'intérieur d'une portion d'une troisième forme de réalisation de la branche de l'invention et
- la figure 6 est une vue en perspective de l'intérieur d'une portion d'une quatrième forme de réalisation de la branche de l'invention.

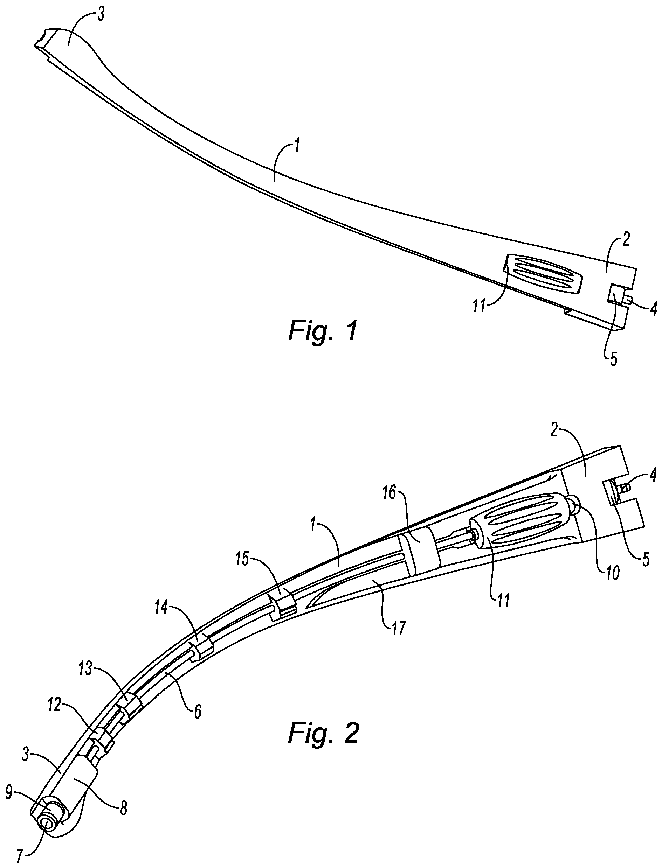

La branche 1 des figures 1 et 2 comporte une extrémité avant d'articulation 2 et une extrémité arrière libre 3. L'extrémité 2 est destinée à être articulée, par l'intermédiaire d'un élément de tenon 4 d'une charnière 5, à un tenon latéral d'une face avant de monture de lunettes. L'extrémité libre 3 est destinée à s'appuyer sur une oreille d'un utilisateur. Une âme 6 s'étend « à l'intérieur », ici plus exactement le long, de la branche 1 entre les deux extrémités 2, 3.

L'âme 6 est ancrée par son extrémité arrière 7 dans l'extrémité arrière libre 3 de la branche 1. Plus précisément, l'âme 6 traverse un tunnel d'extrémité 8 de l'extrémité arrière 3 de la branche et son extrémité 7 est sertie dans un pion d'arrêt 9 en butée contre le tunnel d'extrémité 8, du côté libre de la branche.

Près de son autre extrémité 10, l'âme 6 est filetée et vissée dans un manchon taraudé logé dans une molette de réglage 11 destinée à entraîner le manchon en rotation.

Immobilisé en translation dans la molette 11, quand le manchon est entraîné en rotation, il entraîne l'âme 6 par son extrémité filetée en translation à travers lui et la molette. L'effet de cet entraînement de l'âme 6 est de raccourcir la longueur de l'âme entre le tunnel d'ancrage 8 et la molette de raccourcissement 11.

L'âme 6 s'étend donc le long de la branche 1 mais en passant sous des ponts de mise en forme de la branche espacés les uns des autres, en l'espèce cinq ponts 12-16 entre le tunnel d'ancrage 8 et la molette de raccourcissement 11, ces ponts formant canal dans lequel s'étend l'âme. L'espacement des ponts deux à deux augmente depuis le tunnel 8 jusqu'à la molette 11. Grâce aux ponts, l'âme 6 restant tendue entre eux, du fait du raccourcissement de sa longueur, les ponts se rapprochent deux à deux les uns des autres ce qui provoque une mise en forme, ou déformation de la branche qui se courbe ou se courbe davantage.

Entre les ponts 15 et 16, il est ménagée une nervure inférieure 17 qui s'étend parallèlement à l'âme 6, sous elle, depuis le pont 16 vers le pont 15 et qui s'arrête un peu avant. Cette nervure 17 est une nervure de rigidification qui emêche la branche de se courber dans le plan général de cette nervure entre les deux ponts 15 et 16. La modification du gallbe de la branche 1 ne pourra se produire que dans la portion, entre les deux ponts, qui s'étend au-delà de la nervure et aussi dans la partie terminale de cette nervure qui se termine en pointe arrondie.

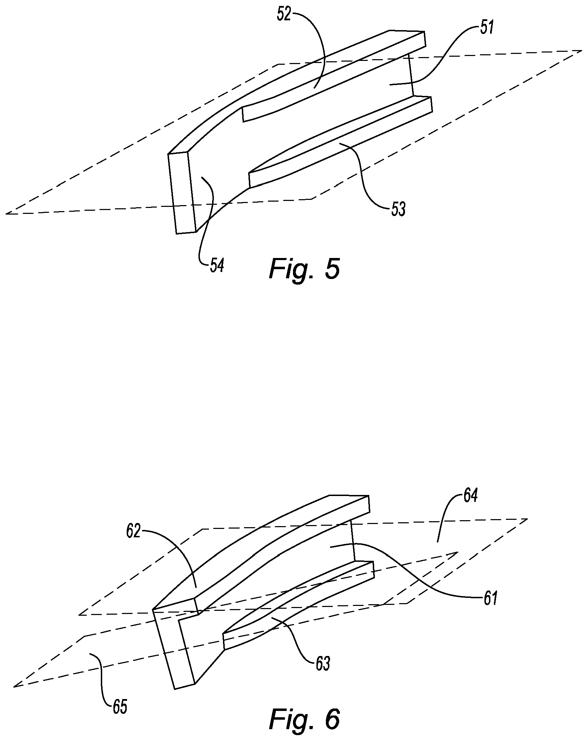

Si on considère la figure 5, une partie de la branche 51 est pourvue de deux nervures de rigidification 52, 53 de bordure, entre lesquelles s'étend l'âme de la branche. Ces deux nervures 52, 53 s'étendent sur la même distance et empêchent donc toute modification de galbe dans leur plan pour ne l'autoriser qu'au-delà (54) et ce, selon les trois directions de l'espace, mais plutôt et autant dans le plan orthogonal au plan des nervures, tel qu'illustré en 55 sur la figure. De même, en référence à la figure 6, la branche 61 comporte, dans la portion représentée, une première nervure de bordure 62, qui s'étend sur toute la longueur de la portion, et une deuxième nervure de bordure 63, mais qui ne s'étend que sur une partie de la portion, comme dans l'exemple de la figure 5. Ainsi, tout comme dans l'exemple précédent, une relative modification du galbe de la branche 61 pourra intervenir dans un plan 64 orthogonal au plan des nervures mais, compte-tenu de la dissymétrie des nervures, également, par composition des forces qui pourraient être exercées, dans un plan 65 incliné sur le plan 64.

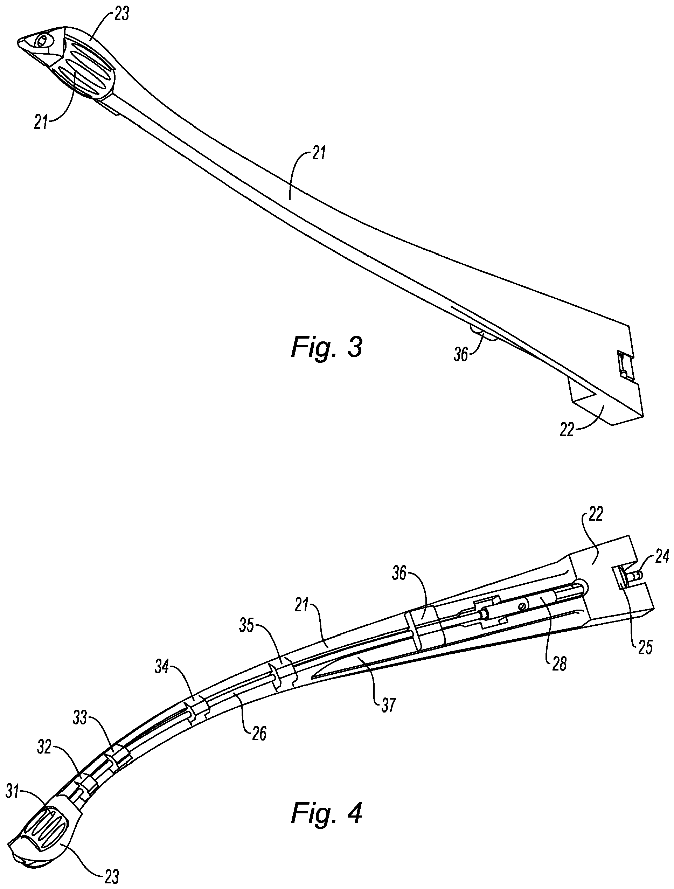

La forme de réalisation de la branche 21 des figures 3 et 4 diffère de celle des figures 1 et 2 par l'inversion des ancrage et molette de réglage. Sur la branche 21, la molette de réglage 31 est disposée à l'extrémité arrière libre 23 et, le tunnel d'ancrage 28, à proximité de l'extrémité d'articulation 22 de la branche. Pour le reste, les éléments de la branche 21 identiques à ceux de la branche 1 sont référencés de manière homologue, seul le chiffre des dizaines étant changé.

Ainsi, l'âme 26 s'étend entre un manchon rotatif dans la molette 31 et le tunnel d'ancrage 28, en passant sous les ponts 32-36, une nervure de rigidification 37 étant ménagée en bordure de la branche entre les ponts 35 et 36.

On notera que l'âme de la branche peut être plus ou moins souple ou rigide. Plus l'âme est rigide, plus la flèche créée entre l'âme rectiligne et l'arc de la branche entre deux ponts est faible. Par ailleurs, on remarquera que la cambrure de la branche dépend des distances entre deux ponts successifs.

## Revendications

1. Branche (1 ; 2) de monture de lunettes comportant une extrémité avant d'articulation (2 ; 22), agencée pour être articulée à une face avant de monture par l'intermédiaire d'un élément de tenon (4) d'une charnière (5), à un tenon latéral de la face avant de monture, et une extrémité arrière libre (3 ; 23), une âme (6 ; 26) s'étendant à l'intérieur d'au moins une portion de la branche, l'une des deux extrémités avant et arrière de l'âme (6 ; 26) étant ancrée (8 ; 28) dans la branche et l'autre des extrémités de l'âme étant montée mobile sous l'action d'une mise en forme, **caractérisée par le fait que** l'âme (6 ;26) s'étend à l'intérieur d'une extrémité à l'autre de la branche, l'extrémité de l'âme (6 ;26) qui est ancrée (8 ;28) l'est dans l'une des deux extrémités avant et arrière de la branche,
la branche comporte, fixés à elle, des moyens d'entrainement et de mise en forme (11, 16 ; 31, 36) pour entraîner ladite autre extrémité mobile de l'âme dans l'autre des extrémités de la branche et déformer la branche et modifier ainsi son galbe.

2. Branche de monture selon la revendication 1, dans laquelle l'extrémité arrière (7) de l'âme (6) est ancrée dans l'extrémité arrière libre (3) de la branche (1), les moyens d'entraînement (1 1) étant disposés dans l'extrémité avant d'articulation (2) de la branche (1).

3. Branche de monture selon la revendication 1, dans laquelle l'extrémité arrière de l'âme (26) est montée mobile en déplacement dans l'extrémité arrière libre (23) de la branche (21), les moyens d'entraînement (31) étant disposés dans l'extrémité arrière libre (23) de la branche (21).

4. Branche selon l'une des revendications 1 à 3, dans laquelle l'extrémité mobile (10) de l'âme (6 ; 26) est filetée pour coopérer avec un manchon taraudé des moyens d'entraînement et de mise en forme de la branche comprenant aussi une molette (1 1; 31) d'entraînement en rotation du manchon.

5. Branche selon l'une des revendications 1 à 4, dans laquelle l'âme (6 ; 26) s'étend dans un canal (12, 16 ; 32, 36) ménagé dans la branche et le long duquel sont ménagés des ponts espacés de mise en forme sous lesquels passe l'âme (6; 26).

6. Branche selon l'une des revendications 1 à 5, dans laquelle il est prévu au moins une zone rigidifiée locale (17 ; 37) empêchant la modification du galbe dans un plan pour la permettre orthogonalement à ce plan.

## Patentansprüche

1. Bügel (1; 2) eines Brillengestells, umfassend ein vorderes Gelenkende (2; 22), das angeordnet ist, um an einer Gestellvorderseite anhand eines Zapfenelements (4) eines Scharniers (5) an einem seitlichen Zapfen der Gestellvorderseite angelenkt zu sein, und ein freies hinteres Ende (3; 23), einen Steg (6; 26), der sich im Innern mindestens eines Abschnitts des Bügels erstreckt, wobei eines von den vorderen und hinteren Enden des Stegs (6; 26) in dem Bügel verankert ist (8; 28), und das andere der Enden des Stegs unter der Einwirkung einer Formgebung beweglich montiert ist, **dadurch gekennzeichnet, dass** sich der Steg (6; 26) im Innern von einem Ende des Bügels zum anderen erstreckt, dass das Ende des Stegs (6; 26), das verankert ist (8; 28), in einem der beiden vorderen und hinteren Enden des Bügels verankert ist, dass der Bügel daran befestigt Mitnahme- und Formgebungsmittel (11, 16; 31, 36) umfasst, um das andere bewegliche Ende des Stegs in dem anderen der Enden des Bügels mitzunehmen und den Bügel zu verformen und somit seine Rundung zu ändern.

2. Gestellbügel nach Anspruch 1, wobei das hintere Ende (7) des Stegs (6) in dem freien hinteren Ende (3) des Bügels (1) verankert ist, wobei die Mitnahmemittel (11) in dem vorderen Gelenkende (2) des Bügels (1) angeordnet sind.

3. Gestellbügel nach Anspruch 1, wobei das hintere Ende des Stegs (26) in dem freien hinteren Ende (23) des Bügels (21) verschiebbar montiert ist, wobei die Mitnahmemittel (31) in dem freien hinteren Ende (23) des Bügels (21) angeordnet sind.

4. Bügel nach einem der Ansprüche 1 bis 3, wobei das bewegliche Ende (10) des Stegs (6; 26) mit einem Außengewinde versehen ist, um mit einer Hülse mit Innengewinde der Mitnahme- und Formgebungsmittel des Bügels, die auch ein Rändelrad (11; 31) zur Drehung der Hülse umfassen, zusammenzuwirken.

5. Bügel nach einem der Ansprüche 1 bis 4, wobei sich der Steg (6; 26) in einem Kanal (12, 16; 32, 36) erstreckt, der in dem Bügel eingerichtet ist und an dem beabstandete Formgebungsbrücken eingerichtet sind, unter denen der Steg (6; 26) hindurchgeht.

6. Bügel nach einem der Ansprüche 1 bis 5, wobei mindestens eine lokale versteifte Zone (17; 37) bereitgestellt ist, die eine Änderung der Rundung in einer Ebene verhindert, um sie orthogonal zu dieser Ebene zu erlauben.

## Claims

1. A spectacle frame side (1;2) including an articulation front end (2;22) adapted to be articulated to a frame front face via a tenon element (4) of a hinge (5), to a lateral tenon of the frame front face, and a free rear end (3;23), a core (6;26) extending inside at least a portion of the side, one of the two front and rear ends of the core (6;26) being anchored (8;28) in the side and the other of the ends of the core being movably mounted under a shaping action, **characterized in that** the core (6;26) extends inside from one end to the other of the side, the end of the core (6;26), which is anchored (8;28), is anchored in one of the two front and rear ends of the side, the side includes, fixed to it, driving and shaping means (11,16; 31,36) for driving the other movable end of the core in the other of the ends of the side and to deform the side and thus to modify its contour.

2. A frame side as claimed in claim 1, wherein the rear end (7) of the core (6) is anchored in the free rear end (3) of the side (1), the driving means (11) being disposed in the articulation front end (2) of the side (1) .

3. A frame side as claimed in claim 1, wherein the rear end of the core (26) is movably mounted in the free rear end (23) of the side (21), the driving means (31) being disposed in the free rear end (23) of the side (21).

4. A frame side as claimed in one of claims 1 to 3, wherein the mobile end (10) of the core (6;26) is externally threaded to cooperate with an internally threaded sleeve of the driving and shaping means of the side also including a thumbwheel (11;31) for driving the sleeve in rotation.

5. A frame side as claimed in one of claims 1 to 4, wherein the core (6;26) extends in a channel (12,16; 32,36) formed in the side and along which are provided spaced shaping bridges under which the core (6;26) extends.

6. A frame side as claimed in one of claims 1 to 5, wherein there is provided at least one stiffened local area (17;37) preventing modification of contour in one plane to enable it orthogonally to that plane.
